# EUROPEAN PATENT SPECIFICATION

(11) **EP 3 843 923 B1**
(45) Date of publication and mention of the grant of the patent: **15.05.2024**
(21) Application number: 19761857.2
(22) Date of filing: 29.08.2019
(51) Int. Cl.: B23B 47/28

(54) **IMPROVEMENTS TO JIG APPARATUS**
VERBESSERUNG EINES WERKSTÜCKSPANNERN MIT WERKZEUGFÜHRUNG
AMÉLIORATIONS AUX DISPOSITIFS DE SERRAGE DE PIÈCE AVEC GUIDE D'OUTIL

(30) Priority: 31.08.2018 GB 201814175
(43) Date of publication of application: 07.07.2021
(73) Proprietor: Power Box AG, 6301 Zug (CH)
(72) Inventor: COCORAN, Michael, Stocksfield, Northumberland NE43 7AL (GB); STREET, Louis, Yeovil, Somerset BA22 8HZ (GB); SAUNDERS, Jon, Yeovil, Somerset BA22 8HZ (GB)
(74) Representative: Wood, Graham
(86) International application number: PCT/EP2019/073143
(87) International publication number: WO 2020/043852

(56) References cited:
- EP-A1- 1 712 315
- WO-A1-2014/186595
- WO-A1-2017/059372
- KR-A- 20140 057 068
- US-A- 2 367 582
- US-B1- 6 499 224

## Description

The invention to which this application relates is to improvements to apparatus of the type which is used to allow for the guidance of a drill bit of a power tool as the drill bit is powered to rotate and is moved towards and into a workpiece in which a hole is to be drilled. However, it should be noted that although this is the primary use of the apparatus as herein defined, it is possible that the improvement could be utilised in relation to other apparatus for use with other forms of power tool.

There are several types of jig apparatus available commercially but the general principle of all types is that the jig apparatus is provided with a base which is placed on a support surface such as a surface of the workpiece in which the hole is to be formed or alternatively the support surface is a table. The base is typically provided with a body and, in certain embodiments, includes clamping means to allow the workpiece in which the hole is to be formed, to be clamped into position with respect to the jig during the hole forming operation. The jig also includes at least one guide channel which may be formed of a relatively hardwearing material and the guide channel has an opening at one end through which the leading edge of the drill bit can be inserted and the drill bit is then moved along the channel to an opening at the opposing end which is located at or adjacent to the surface of the workpiece and, as the rotating drill bit continues to be moved along the channel, the drill bit enters into the workpiece in a guided manner and forms the hole therein.

As the workpiece and jig apparatus are held in a fixed position and the guide channel is provided to guide the movement of the drill bit, so it is found that the hole which is formed in the workpiece can be formed at the required angle and with great accuracy so as to allow the subsequent use of the hole to receive screws and other fixing means to be more accurately achieved, than if the jig was not used. While the jig apparatus can include other features which allow for the guided movement of the drill bit, and/or the retention of the drill bit when not in use, the above describes the general principle of the apparatus of the type to which the application relates.

In addition to providing the accuracy of the formation of the hole into the workpiece, there is also a need to be able to accurately locate the position at which the hole is formed in the workpiece. It is found that, on many occasions, while the jig apparatus allows the accurate formation of the hole, the hole can be formed in the wrong position on the workpiece which means that the workpiece is rendered unusable and has to be discarded.

WO2017/059372 discloses apparatus for guiding a drilling operation but neither disclose the selective location of guide members for the workpiece on one or both sides of the base or the ability for the user to select the length of the formation assembly with respect to the particular workpiece on which the operation is to be performed at that instant of time KR2014005768 discloses a jig apparatus according to the preamble of appended claim 1.

The aim of the present invention is to provide jig apparatus in an improved form which allows for the accurate relative positioning of the jig, workpiece and drill bit. A further aim is to ensure that the formation of the hole into the workpiece can be more accurately achieved by ensuring that the position of the hole with respect to the workpiece surface can be selected and then maintained during the hole forming procedure.

According to the invention there is provided a jig apparatus, said apparatus including a base, at least one guide channel provided for the receipt and guiding of a drill bit therealong, means for positioning a workpiece with respect to the jig apparatus and retaining the workpiece in a selected position and location means are provided which include a series of elongate members which are selectively positionable to extend from one or both opposing sides of the base and a locator which can be selectively positioned on the elongate members, and locking means are provided to allow the locator to be retained at a selected position on the elongate members so as to allow the positioning of the workpiece with respect thereto, the elongate members are selectively attachable to the base via engagement means provided on the elongate members and on said opposing sides of the base and characterised in that said series of elongate members are selectively joined end-to-end via similar engagement means so as to allow the selection of a length of an elongate member assembly.

Preferably, an edge of the workpiece is brought into contact with the said locator and this allows the workpiece to be located to thereby ensure the formation of the hole using a drill bit which is guided by the jig apparatus occurs at a required location on the workpiece.

In one embodiment, the engagement means include a female portion on one of the elongate member, or base and a male engagement portion on the other of the other of the elongate member, or base.

According to the invention, the base includes engagement means on both opposing sides thereof, to allow the selective location of elongate members therewith so that elongate members can be provided to extend to either or both sides of the base so as to allow the required configuration of jig apparatus for a particular use to be formed.

According to the invention, the extension of the length of the elongate member assembly is selected to suit a particular use of the jig apparatus and/or the size of the workpiece which is to be used therewith.

In one embodiment, the elongate members include a track, in one form provided as linear recesses, therealong with which the locater engages and can slide. Typically the track is provided at the same location on each elongate member such that when the elongate members are joined together end-to-end, a continuous track is formed.

In one embodiment the track recesses are formed on opposing side walls of the elongate member or, alternatively could be provided on the top wall.

Preferably, the locator includes portions which are received within the track recesses so as to allow the locator to be capable of being slid along the track towards and away from the base of the jig apparatus to move the locator to the required position.

Preferably, the elongate member has one or more measurement scales formed along the same so as to allow the position of the locator with respect to the side of the base, or another datum point, such as the position of the drill bit when located in the guide channel, to be identified and selected and measured. This allows the user to, firstly, decide on the number of elongate members which are required to be formed on the side of the jig apparatus in order to accommodate the particular workpiece which is to be used and the location of the hole which is to be formed in relation thereto and, secondly, to then move the locator to a particular measurement location on the elongate member(s) so as to allow the distance from the edge of the workpiece which abuts with the locator to the hole which is to be formed, to be accurately set and maintained in use of the apparatus.

Preferably, when the locator is moved to the required position on the elongate member, the locking means on the locator and/or elongate member, allows the locator to be locked in that fixed position. At that point, the workpiece edge can be moved to contact with the locator and hence the user can be sure that the workpiece edge will be retained at the selected distance and the workpiece can then be clamped in position and the hole formed using the jig apparatus guide channel and drill bit.

Specific embodiments of the invention are described with reference to accompanying drawings; wherein
Figure 1 illustrates an example of a jig apparatus in accordance with one embodiment of the invention utilising elongate members in accordance with the invention.
Figures 2a and b illustrates a locator in accordance with one embodiment of the invention;
Figure 3 illustrates the manner in which the locator can be selectively positioned with respect to the elongate member; and
Figures 4a-c illustrate the jig apparatus in different embodiments.

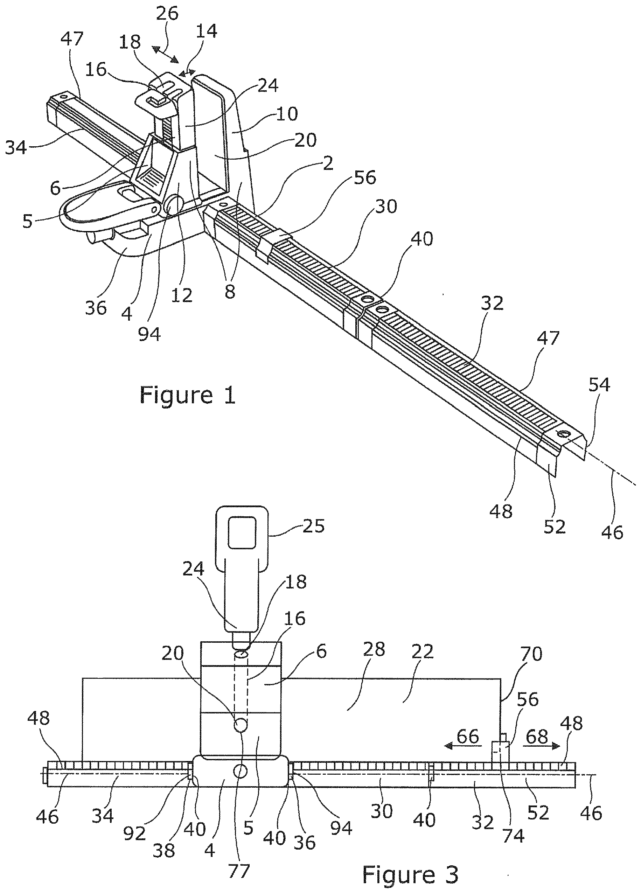

Referring firstly to Figure 1, there is illustrated a jig apparatus 2 in accordance with one embodiment of the invention and the apparatus includes a base 4, a body 5, a drillbit guide assembly 6, clamping means 8 which includes a fixed jaw 10 provided as part of the base and a jaw 12 provided as part of the body 5 which is moveable towards and away from the fixed jaw 10 as indicated by arrow 14. The body 5 also receives the guide assembly 6 with one or more channels 16. Each channel 16 has a first opening 18 into which the free end of the drill bit can be inserted and a second, opposing opening 20 through which the drill bit is moved, whilst rotating, to move into a workpiece 22 which is clamped between the said first and second jaws 10, 12 as illustrated in Figure 3.

Thus, the drill bit can be inserted through the first opening 18, moved along the guide channel 16 in a guided manner and leaves the second opening 20 and moves into the workpiece with the relative angular position of the axis 24 along which the drill bit is moved as indicated by arrow 26 and the surface 28 of the workpiece 22 into which the hole is formed, guided and controlled. The power tool (shown in broken lines in Figure 3) such as a drill 25, used to drive the drill bit is located above the first opening 18, as shown.

The base 4 also has attached thereto, selectively, one or more elongate members, in this embodiment, three elongate members 30,32,34 with the members 30, 34 attached to opposing sides 36, 38 of the base using engagement means 40 and the elongate member 32 attached to the free end 42 of the member 30 using engagement means 40, and in one embodiment, the engagement means may be in the form of a dovetail joints or alternative forms.

Typically, each elongate member 30,32,34 includes at least one measurement scale 44 formed along its longitudinal axis 46 and a track 47 which is formed, in this embodiment, by first and second recesses 48,50 formed on the opposing side walls 52,54 of the elongate members and which extend along the length thereof, parallel with the longitudinal axis 46. The elongate members can be attached end-to-end as shown with members 30,32 in Figure 1, so as to allow the length of the elongate member assembly to be selected by the user, and similar engagement means 40 are used to those provided to attach the elongate members to the base.

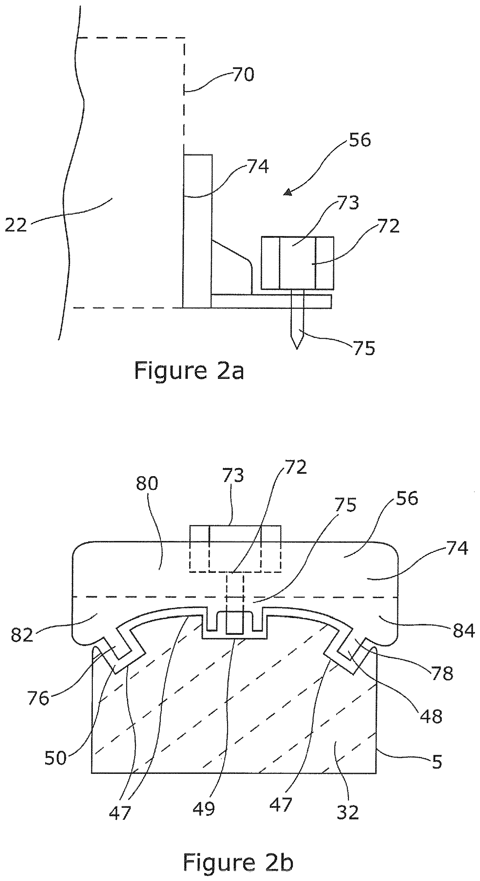

Figures 2a and b illustrate a locator 56 in accordance with one embodiment of the invention and the locator is provided with locking means 72 which pass through part 80 of the locator 56, said part 80 positioned intermediate first and second arms 82,84, which include portions 76, 78 which protrude therefrom and locate with the respective recesses 48,50 of the track of the elongate member and, one of which, is shown in cross section in Figure 2b with the locking portion 56 located thereon. In addition, or alternatively a further portion 49 can be formed as shown in Figure 2b, along the top surface of the elongate member and with which the locking means 72 can be engaged by rotation of a head portion 73 of the locking means by the user to move the same towards the track portion 49 to lock the locator in position, and when the locking means 72 is moved away from the elongate member this allows the sliding movement of the locator along the elongate member track 47 until the desired position is reached and the locking means 72 are then moved by rotation of the head portion 73 to move a shaft 75 through a threaded aperture in the intermediate part 80 and hence lock the locator in that position.

Figure 3 illustrates the manner in which the locator 56 on the elongate members can be slid as indicated by arrows 66, 68 to a required position with reference to the measurement scale 44 so as to allow the locator to be positioned at a predetermined distance from the datum which, in one embodiment is the point of entry 77 of the drill bit into the workpiece 22 to form the hole therein with the workpiece clamped in position in the jig. Once the locator 56 is in position, then the locking means 72 are operated so as to contact with the elongate member and hence lock the locator in position thereon. The edge 70 of the workpiece 22 into which the hole is to be formed is then moved into contact with the contact face 74 of the locator 56 as shown in Figures 2a and 3 and the workpiece 22 can then be clamped in position using the first and second jaws10, 12 of the clamping means.

The user can then be certain that the hole is being formed in the required position on the workpiece.

Once the hole has been formed, then the clamping means are released and the locator 56 is released and, if necessary, moved to a new position and the workpiece edge moved to contact with the same and the process repeated so as to allow further holes, offset from each other, to be formed at the required locations of alternatively the workpiece can be removed if the work is completed.

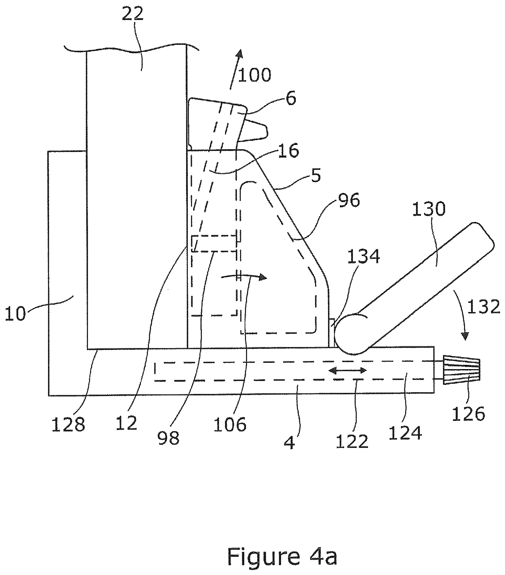

In each of the Figures 4a-c, and indeed as shown in Figures 1 and 3, the jig apparatus includes the clamping means 8 including the fixed jaw 10 and the moveable jaw 12 which is provided as part of the body 5. The body 5 is provided to be slidably moveable along the base 4 as indicated by the arrow 122 in Figure 4a and this is achieved by the provision of a rotatable screw shaft 124 which passes through and along the base 4 and is connected at one end, to a knob or other turning means 126 which can be operated by a user so as to allow the movement of the body 5 which is connected to the threaded shaft 124 so as to be linearly moved by the rotational movement of the threaded shaft 124 in either direction dependent on the particular rotation direction of the knob 126. In order to clamp a workpiece 22 with the apparatus the jaw 12 and hence body 5 are therefore moved towards the fixed jaw 10 until the same contact with the workpiece 22 which is located in the gap 128 between the fixed jaw 10 and moveable jaw 12, until a clamping force is exerted on the workpiece 22. When the workpiece is clamped, the lever 130 is pivotally moved downwardly as indicated by arrow 132 to exert a further clamping force on the body 5 and hence jaw 12 to thereby increase the clamping force exerted on the workpiece 22 via movement of the cam formation at the end of the lever 130 against the body 5.

Once the workpiece is clamped into position, the drill guide assembly 6 is moved to the required position with respect to the body 5 and the workpiece 22 so that the end 20 of the channel 16 is positioned at the required position adjacent the workpiece so as to allow the drill bit to pass through the channel 16 through the exit hole 20 and into the workpiece to form the required hole therein. Once this has been done, the lever 130 can be moved to the position shown in Figure 4a to release the initial clamping force and then the knob 126 can be turned so as to move the jaw 12 and body 5 away from the workpiece so as to release the same and allow the workpipece to be removed completely or moved to another position so as to allow a further hole to be formed therein, offset from the first, and the process is repeated.

Figures 4a-c illustrate embodiments of the arrangement between the guide assembly means 6, the body 5 and the base 4 of the apparatus.

In Figure 4a, there is illustrated the manner in which debris exit apertures 92, 94 shown in Figures 1 and 3 on either side of the body 5, are no longer present and therefore a cavity 96 within the body 5, acts as a collection point for any debris which passes from the drill guide assembly 6 though apertures 98 connecting the guide channels 16 and the cavity 96, in the direction of arrow 106. The removal of the drill guide assembly 6 from the body 5 in the direction of arrow 100 then allows the debris which is collected in the cavity, to be removed and dispensed. The advantage of this arrangement is that it allows debris to be collected and the cavity typically has sufficient volume to collect the amount of debris which is created during a particular working operation of the jig so that the cavity only requires to be emptied once the end of use of the jig for a particular working operation.

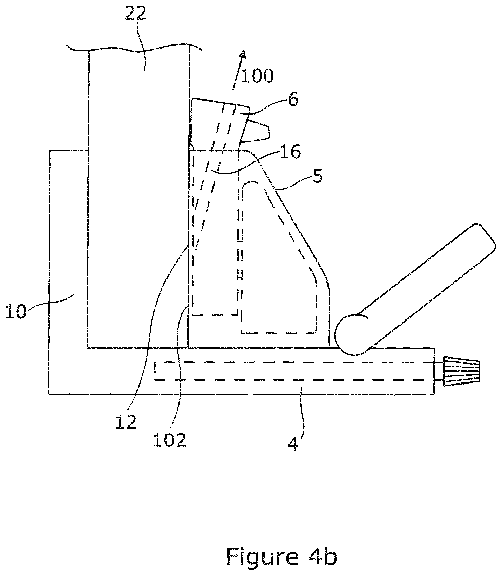

Figure 4b illustrates a further arrangement in which there is provided no passage 98 between the drill guide assembly 6 and the body 5 so that the debris which is created can simply be removed from the working area 102 as the drill guide assembly 6 is removed from the body 5 in the direction of arrow 100.

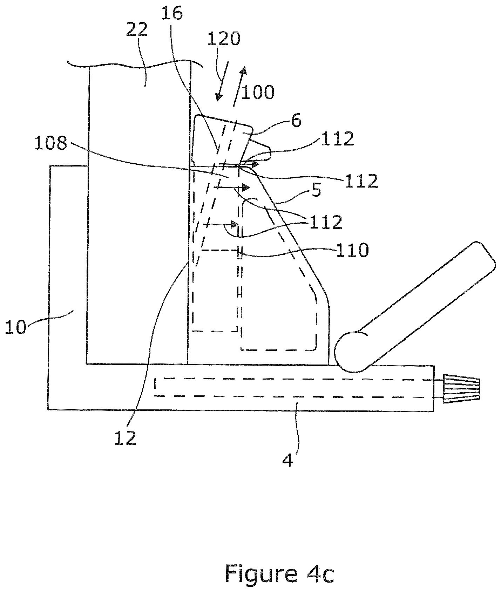

Figure 4c illustrates a further embodiment in which, in this case, the drill guide assembly 6 has a port 108 formed therein which allow debris to exit the channel 16 with which the port 108 connects, to the rear 110 of the drill guide assembly in the direction of arrows 112 as the cutting of the hole in the workpiece 22 occurs. The size of the opening of the port 108 above the body 5 at the rear 110 of the drill guide assembly 6 is dependent on the position of the said drill guide assembly with respect to the body 5 at the instant of time of use. The drill guide assembly can be raised as indicated by arrow 100 or lowered as indicated by arrow 120 to suit the particular use of the jig and workpiece 22 and is shown in Figure 4c in its lowest position 5.

## Claims

1. A jig apparatus (2), said apparatus including a base (4), at least one guide channel (16) provided for the receipt and guiding of a drill bit therealong, means for positioning a workpiece (22) with respect to the jig apparatus and retaining the workpiece in a selected position and location means are provided which include a series of elongate members (30,32,34) which are selectively positionable to extend from one or both opposing sides (36,38) of the base and a locator (56) which can be selectively positioned on the elongate members, and locking means (72) are provided to allow the locator to be retained at a selected position on the elongate members so as to allow the positioning of the workpiece with respect thereto, the elongate members (30,32,34) are selectively attachable to the base via engagement means (40) provided on the elongate members and on said opposing sides of the base and **characterised in that** said series of elongate members are selectively joined end-to-end via similar engagement means (40) so as to allow the selection of a length of an elongate member assembly.

2. Apparatus according to claim 1 **characterised in that** the engagement means (40) include a female and a male engagement portion, one on the elongate member (30,32,34) and the other on said base (4).

3. Apparatus according to any of the preceding claims **characterised in that** the elongate members (30,32,34) include a track (47) therealong with which the locator slidably engages.

4. Apparatus according to claim 3 **characterised in that** the track (47) is provided at the same location on each elongate member (30,32,34) such that when elongate members are joined end-to-end a continuous track is formed.

5. Apparatus according to any of the preceding claims **characterised in that** the track (47) includes portions formed on opposing side walls.

6. Apparatus according to any claims 1-5 **characterised in that** the track (47) is formed on the top wall of the elongate member.

7. Apparatus according to claim 3 **characterised in that** the locator (56) includes portions which are received with the track (47) so as to allow the locator to be slid along the track towards and away from the body (5) of the jig apparatus to move the locator to the required position.

8. Apparatus according to any of the preceding claims **characterised in that** the elongate members (30,32,34) have one or more measurement scales formed along the same so as to allow the position of the locator with respect to the side of the base, or another datum point, to be selected and measured.

## Patentansprüche

1. Aufspannvorrichtung (2), wobei die genannte Vorrichtung eine Basis (4), wenigstens einen Führungskanal (16), der zur Aufnahme und zum Führen eines Bohreinsatzes daran entlang vorgesehen ist, ein Mittel zum Positionieren eines Werkstücks (22) mit Bezug auf die Aufspannvorrichtung und zum Festhalten des Werkstücks in einer ausgewählten Position beinhaltet und wobei Aufnahmemittel vorgesehen sind, die eine Reihe von langgestreckten Elementen (30, 32, 34), die selektiv positionierbar sind, um sich von einer der einander entgegengesetzten Seiten (36, 38) der Basis oder von beiden zu erstrecken, und ein Haltestück (56), das selektiv auf den langgestreckten Elementen positioniert werden kann, beinhalten und wobei Feststellmittel (72) vorgesehen sind, damit das Haltestück an einer ausgewählten Position auf den langgestreckten Elementen festgehalten werden kann, um die Positionierung des Werkstücks mit Bezug darauf zu ermöglichen, wobei die langgestreckten Elemente (30, 32, 34) über an den langgestreckten Elementen und an den genannten einander entgegengesetzten Seiten der Basis vorgesehene Eingriffsmittel (40) selektiv an der Basis angebracht werden können, und **dadurch gekennzeichnet, dass** die genannte Reihe der langgestreckten Elemente über ähnliche Eingriffsmittel (40) selektiv Ende an Ende aneinandergefügt sind, um die Auswahl einer Länge einer Anordnung langgestreckter Elemente zu ermöglichen.

2. Vorrichtung nach Anspruch 1, **dadurch gekennzeichnet, dass** die Eingriffsmittel (40) einen weiblichen und einen männlichen Eingriffsteil beinhalten, einen an dem langgestreckten Element (30, 32, 34) und den anderen an der genannten Basis (4).

3. Vorrichtung nach einem der vorhergehenden Ansprüche, **dadurch gekennzeichnet, dass** die langgestreckten Elemente (30, 32, 34) eine Bahn (47) beinhalten, an der entlang das Haltestück verschiebbar mit ihr in Eingriff ist.

4. Vorrichtung nach Anspruch 3, **dadurch gekennzeichnet, dass** die Bahn (47) an jedem langgestreckten Element (30, 32, 34) an der gleichen Position bereitgestellt ist, so dass, wenn die langgestreckten Elemente Ende an Ende aneinandergefügt werden, eine ununterbrochene Bahn gebildet wird.

5. Vorrichtung nach einem der vorhergehenden Ansprüche, **dadurch gekennzeichnet, dass** die Bahn (47) an einander entgegengesetzten Seitenwänden gebildete Teile beinhaltet.

6. Vorrichtung nach einem der Ansprüche 1 bis 5, **dadurch gekennzeichnet, dass** die Bahn (47) auf der oberen Wand des langgestreckten Elements gebildet ist.

7. Vorrichtung nach Anspruch 3, **dadurch gekennzeichnet, dass** das Haltestück (56) Teile beinhaltet, die mit der Bahn (47) aufgenommen werden, damit das Haltestück (47) an der Bahn entlang zum Körper (5) der Aufspannvorrichtung hin und von ihm weg verschoben werden kann, um das Haltestück auf die gewünschte Position zu bewegen.

8. Vorrichtung nach einem der vorhergehenden Ansprüche, **dadurch gekennzeichnet, dass** die langgestreckten Elemente (30, 32, 34) eine oder mehr entlang derselben gebildete Messskalen haben, damit die Position des Haltestücks mit Bezug auf die Seite der Basis oder einen anderen Bezugspunkt ausgewählt und gemessen werden kann.

## Revendications

1. Dispositif de serrage de pièce (2), ledit appareil incluant une base (4), au moins un canal de guidage (16) prévu pour la réception et le guidage d'un foret le long de celui-ci, un moyen pour positionner une pièce à travailler (22) par rapport au dispositif de serrage de pièce et retenir la pièce à travailler dans une position sélectionnée et des moyens de localisation sont prévus qui incluent une série d'éléments allongés (30, 32, 34) qui sont aptes à être positionnés de manière sélective pour s'étendre à partir d'un côté opposé ou des deux côtés opposés (36, 38) de la base et un localisateur (56) qui peut être positionné de manière sélective sur les éléments allongés, et des moyens de verrouillage (72) sont prévus pour permettre au localisateur d'être retenu au niveau d'une position sélectionnée sur les éléments allongés de sorte à permettre le positionnement de la pièce à travailler par rapport à celui-ci, les éléments allongés (30, 32, 34) sont aptes à être attachés de manière sélective à la base par l'intermédiaire de moyens de mise en prise (40) prévus sur les éléments allongés et sur lesdits côtés opposés de la base et **caractérisé en ce que** ladite série d'éléments allongés sont joints bout à bout de manière sélective par l'intermédiaire de moyens de mise en prise similaires (40) de sorte à permettre la sélection d'une longueur d'un ensemble élément allongé.

2. Dispositif selon la revendication 1, **caractérisé en ce que** les moyens de mise en prise (40) incluent une portion de mise en prise femelle et mâle, une sur l'élément allongé (30, 32, 34) et l'autre sur ladite base (4).

3. Dispositif selon n'importe lesquelles des revendications précédentes **caractérisé en ce que** les éléments allongés (30, 32, 34) incluent un rail (47) le long de ceux-ci avec lesquels le localisateur se met en prise de manière coulissante.

4. Dispositif selon la revendication 3 **caractérisé en ce que** le rail (47) est prévu au niveau du même emplacement sur chaque élément allongé (30, 32, 34) de telle sorte que, lorsque les éléments allongés sont joints bout à bout, un rail continu est formé.

5. Dispositif selon n'importe lesquelles des revendications précédentes **caractérisé en ce que** le rail (47) inclut des portions formées sur des parois latérales opposées.

6. Dispositif selon n'importe lesquelles des revendications 1-5 **caractérisé en ce que** le rail (47) est formé sur la paroi supérieure de l'élément allongé.

7. Dispositif selon la revendication 3 **caractérisé en ce que** le localisateur (56) inclut des portions qui sont reçues avec le rail (47) de sorte à permettre au localisateur d'être coulissé le long du rail vers le corps (5), et en éloignement du corps du dispositif de serrage de pièce afin de déplacer le localisateur à la position requise.

8. Dispositif selon n'importe lesquelles des revendications précédentes **caractérisé en ce que** les éléments allongés (30, 32, 34) ont une ou plusieurs échelles de mesure qui sont formées le long de ceux-ci de sorte à permettre à la position du localisateur d'être sélectionnée et mesurée par rapport au côté de la base, ou par rapport à un autre point de repère.
